# EUROPÄISCHE PATENTSCHRIFT

(11) **EP 0 666 087 B1**
(45) Veröffentlichungstag und Bekanntmachung des Hinweises auf die Patenterteilung: **22.09.1999**
(21) Anmeldenummer: 94105109.6
(22) Anmeldetag: 31.03.1994
(51) Int. Cl.: A62C 35/13, A62C 37/44, A62C 39/00, A62C 35/68, F17C 13/04, F16K 1/30, F16K 31/122

(54) **Vorrichtung zum Betreiben einer Feuerlöscheinrichtung**
Apparatus for operating a fire extinguishing system
Dispositif de fonctionnement d'un système d'extinction d'incendies

(30) Priorität: 27.01.1994 DE 4402396
(43) Veröffentlichungstag der Anmeldung: 09.08.1995
(73) Patentinhaber: TOTAL WALTHER GmbH, Feuerschutz und Sicherheit, 51069 Köln (DE)
(72) Erfinder: Klingberg, Peter, D-51107 Köln (DE); Kötter, Karl, D-51503 Rösrath (DE); Schaefers, Herbert, D-51491 Overath (DE); Schmidt, Werner, D-50374 Erfstadt (DE)
(74) Vertreter: Selting, Günther, Dipl.-Ing.

(56) Entgegenhaltungen:
- EP-A- 0 010 465
- EP-A- 0 409 237
- EP-A- 0 615 771
- FR-A- 1 330 001
- FR-A- 2 646 783

## Beschreibung

Die Erfindung betrifft eine Vorrichtung zum Betreiben einer Feuerlöscheinrichtung mit einem gasförmigen Löschmittel, das in mehreren Gasflaschen oder dergleichen gelagert ist.

Derartige Feuerlöscheinrichtungen arbeiten mit einer flüssigen Kohlensäure als Löschmittel, die in Hochdruck-Stahlflaschen gelagert und zu Batterien zusammengefaßt sind. Alle Stahlflaschen sind mit einem Flaschenventil versehen, die über Hochdruckschläuche an ein gemeinsames Sammelrohr angeschlossen sind. In der Regel ist die erste Flasche einer Flaschengruppe eine Steuer- und/oder Pilotflasche, dessen Flaschenventil mit einer elektrisch gesteuerten Stoßfeder oder dergleichen bestückt ist. Ausgehend von einer Brandmeldezentrale wird die Stoßfeder zunächst elektrisch angesteuert und öffnet damit das Flaschenventil der Steuer- oder Pilotflasche. Der Inhalt dieser Flasche strömt über die Steuerleitung zu den übrigen Flaschenventilen, die dadurch geöffnet werden.

Auch andere geeignete Gase werden für derartige Feuerlöscheinrichtungen eingesetzt, wie z.B. Halon, Argon, INERGEN.

Behördliche Vorschriften besagen, daß Feuerlöscheinrichtungen mit einem gasförmigen Löschmittel in Räumen, Hallen oder dergleichen erst dann geöffnet werden dürfen, wenn Personen gewarnt und zum Verlassen der Räume aufgefordert sind. Zu diesem Zweck sind die Flaschenventile der Steuer- und/oder Pilotflaschen mit einer Verzögerungseinrichtung versehen, die erst nach Ablauf einer voreingestellten Zeit die Steuer- oder Pilotflasche öffnen.

Die älteren Steuerventile sind mit zusätzlichen pneumatischen oder elektrisch gesteuerten Einrichtungen versehen, die separate Bauteile erfordern, so daß auch das Flaschenventil mit mehreren Einzelteilen ausgerüstet sein muß. Damit werden der Verschleiß und die Undichtheiten vergrößert und letztlich die Funktion der Feuerlöscheinrichtung beeinträchtigt.

Der Oberbegriff des Patentanspruchs 1 und des Patentanspruchs 2 geht jeweils aus von einer Vorrichtung nach EP-A-0 409 237. Bei der dort beschriebenen Feuerlöscheinrichtung ist in die von der Steuerflasche zur Steuerleitung führende Gasleitung ein Magnetventil geschaltet, das von einer Brandmeldezentrale gesteuert wird. Die Brandmeldezentrale steuert ferner weitere Magnetventile, um im Auslösefall akustische Signalgeber zu betätigen. Ein Verzögerungsglied sorgt dafür, daß die Steuerleitung zeitverzögert Ventile betätigt, durch die mehrere Gasflaschen mit einer Sammelleitung verbunden werden.

Eine Feuerlöscheinrichtung, die gemäß Art. 54 (3) EPÜ als Stand der Technik gilt, ist in EP-A-0 615 771 beschrieben. Bei dieser Feuerlöscheinrichtung bestehen das Steuerventil und die Flaschenventile jeweils aus einem direktgesteuerten Kolbenventil mit einer aufgeschraubten Kappe mit einem Anschlußstutzen. Die Auslöseeinrichtung ist jeweils auf das Kolbenventil aufgesetzt, jedoch ist eine Verzögerungseinrichtung nicht vorhanden.

Der Erfindung liegt die Aufgabe zugrunde, eine Vorrichtung zum Betreiben einer Feuerlöscheinrichtung mit einem gasförmigen Löschmittel zu schaffen, bei der die Funktionsfähigkeit verbessert ist.

Diese Aufgabe wird erfindungsgemäß mit den im Patentanspruch 1 bzw. den im Patentanspruch 2 angegebenen Merkmalen gelöst.

Bei beiden Varianten der Erfindung werden die Flaschenventile über die Steuerleitungen direkt angesteuert, so daß bei erhöhter Betriebssicherheit eine gleichmäßige Aufsteuerung der Flaschenventile gewährleistet ist. Damit steht nicht nur eine nahezu wartungsfreie Einrichtung zur Verfügung, sondern die Wartung wird, wenn sie einmal nötig sein sollte, auch vereinfacht.

Die Ausbildung des Kolbenventils mit einer Kappe hat den weiteren Vorteil, daß ohne bauliche Änderungen des Kolbenventils die Kappe für das Steuerventil als Auslösevorrichtung ausgebildet und an den Anschlußstutzen eine Auslöseeinrichtung angeschlossen sein kann und daß die Anschlußstutzen der Kappen für die Flaschenventile mit den Zweigleitungen verbunden sind.

Vorzugsweise ist weiterhin vorgesehen, daß eine pneumatische Verzögerungseinrichtung an die Steuerleitung zwischen dem Steuerventil und dem ersten Flaschenventil als Steuerelement eingebaut und mit einer Warneinrichtung versehen ist. Somit kann auf eine zu-sätzliche Steuereinrichtung für die Flaschenventile verzichtet werden.

Ist die Steuerflasche als Pilotflasche mit Löschgas gefüllt und in die Steuerleitung ein Drosselorgan mit Rückschlagventil eingebaut, so kann eine an dem Drosselorgan angeschlossene Leitung mit der Sammelleitung verbunden werden. Ist das Drosselorgan zwischen dem Steuerventil und dem ersten Flaschenventil eingebaut, kann der Inhalt der Pilotflasche für den Löschvorgang benutzt werden. Ausgehend von der Pilotflasche wird deren Inhalt in zwei Ströme aufgeteilt, von denen einer zum Löschen und der andere zum Aufsteuern der Folgeflaschen verwendet wird. Das Drosselorgan sorgt für eine gleichmäßige Beaufschlagung der Steuerleitung und die Flaschenventile verhindern einen Rückstrom in die die Flaschen. Das Drosselorgan kann auch hinter dem letzten Flaschenventil in einer Steuerleitung eingebaut sein. Bei dieser Anordnung ist dann eine Leitung vom Drosselorgan zur Sammelleitung geführt. Mit dieser Maßnahme wird erreicht, daß das Gas aus der Pilotflasche zunächst nur zum Steuern und dann erst zum Löschen verwendet wird.

Das Drosselorgan kann auch als Rückschlagventil ausgebildet sein. Dies sorgt dann dafür, daß das Gas aus der Pilotflasche so lange voll zur Beaufschlagung der Steuerleitung zur Verfügung steht, bis sich ein Druckaufbau in der Sammelleitung eingestellt hat. Erst dann öffnet das Doppelrückschlagventil und gibt das Gas aus der Pilotflasche zum Löschen frei. Ein weiterer Erfindungsgedanke ist darin zu sehen, daß die Steuerflasche als Pilotflasche mit Löschgas gefüllt ist und daß von dem Steuerventil eine Abführleitung zu der Sammelleitung und von der Sammelleitung jeweils eine Steuerleitung zu den Flaschenventilen geführt ist. Die Sammelleitung ist mit mindestens zwei Drosseln versehen. Bei dieser Ausgestaltung fließt das Gas aus der Pilotflasche direkt in die Sammelleitung, in der sich dann ein Druck zum Öffnen der Flaschenventile der Folgeflaschen aufbaut. Die Drosselstellen in der Sammelleitung sichern den Druckaufbau in dieser Leitung und gewährleisten ohne Steuer-leitungen ein einwandfreies Öffnen der Flaschenventile.

Ausführungsbeispiele der Erfindung sind in der Zeichnung schematisch dargestellt und werden nachfolgend näher beschrieben. Es zeigt:
Fig. 1 eine Flaschengruppe mit entsprechenden Ventilleitungen und dergleichen,
Fig. 2 bis 4 weitere Ausführungsbeispiele,
Fig. 5 eine Flaschengruppe ohne Steuerleitungen,
Fig. 6 eine vergrößerte Darstellung eines Flaschenventils,
Fig. 7 ein Flaschenventil mit einem versetzten Stutzen mit Berstscheibe,
Fig. 8 ein weiteres Flaschenventil,
Fig. 9 ein Steuerventil,

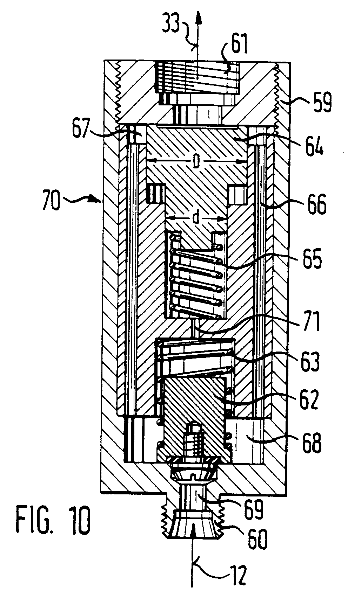

Fig. 10 eine vergrößerte Darstellung des Doppel-Rückschlagventils.

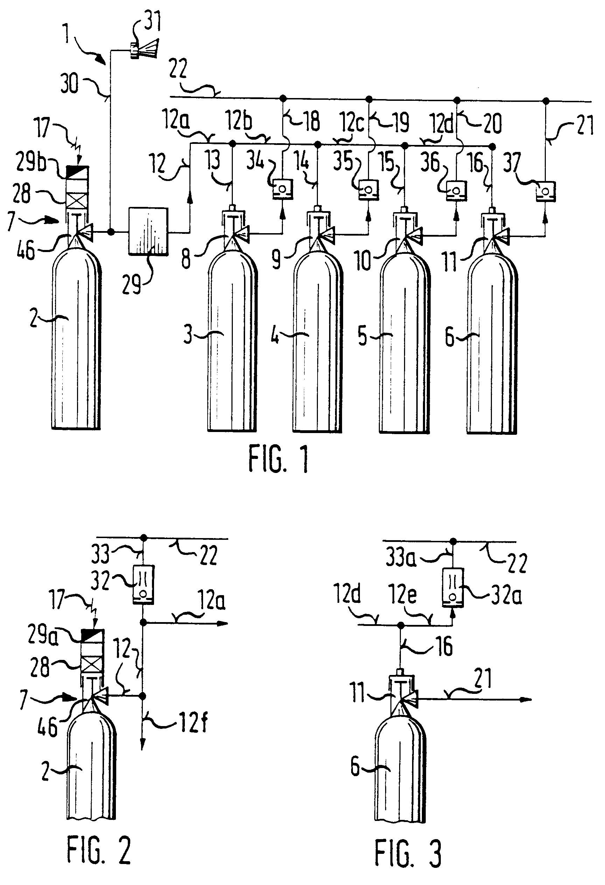

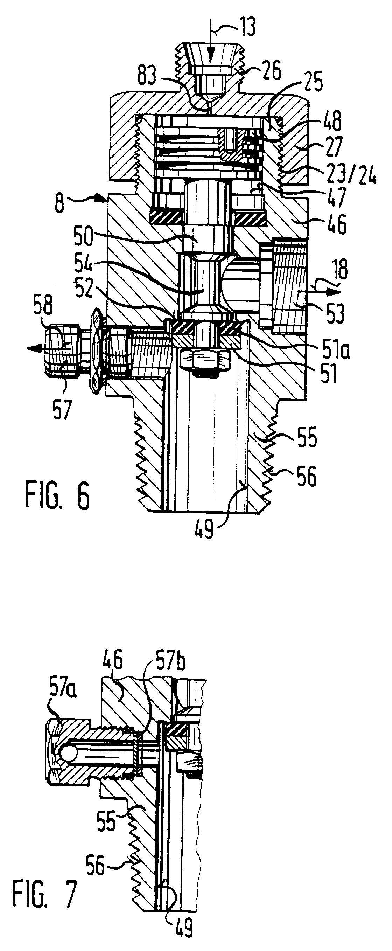

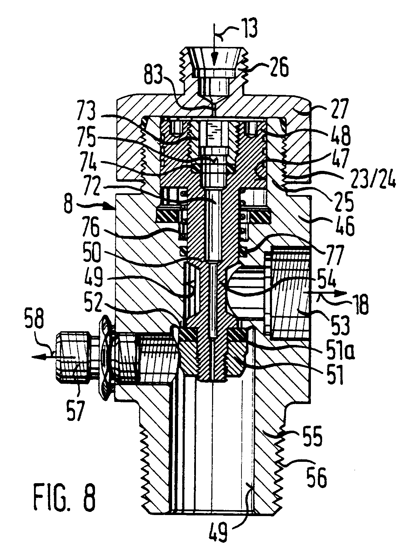

Die Feuerlöscheinrichtung 1 besteht aus einer Batterie mit den Hochdruckgasflaschen 2 bis 6, wobei im Ausführungsbeispiel nach Fig. 1 die Flasche 2 mit einem Steuergas und die Nachfolgeflaschen 3 bis 6 mit einem unter Hochdruck stehenden gasförmigen Löschmittel gefüllt sind. Die Flasche 2 ist mit einem Steuerventil 7 und die Folgeflaschen 3 bis 6 jeweils mit einem Flaschenventil 8 bis 11 versehen. Diese Flaschenventile bestehen aus einem direkt gesteuerten Kolbenventil, wie es in Fig. 6 oder Fig. 8 dargestellt ist, die einen Ventilkörper 46 aufweisen, wobei die Flaschenventile 8 bis 11 mittels einer Kappe 27 im oberen Bereich abgeschlossen sind. Beim Steuerventil 7 ist anstelle der Kappe 27 eine Auslösevorrichtung 28 in einem Gehäuse 27a und einer an sich bekannten Auslöseeinrichtung 17 mit unverzögerter Steuereinrichtung 29b versehen. Zum Aufschrauben der Kappe 27 mit einem Anschlußstutzen 26 ist ein Stutzen 25 mit Außengewinde 23 auf den Ventilkörper 46 aufgesetzt, auf den die Kappe mit dem Innengewinde 24 aufgeschraubt ist. Der Stutzen 25 kann auch verlängert und mit einem Innengewinde versehen sein, in das die Kappe 27 mit einem Außengewinde eingeschraubt wird. In einer Innenbohrung 47 befindet sich ein Kolben 48 mit einer Kolbenstange 50, die am unteren Ende mit einer Ventilplatte 51 und einer Dichtung 51a versehen ist. Diese liegt an einem Dichtsitz 52 des Ventilkörpers 46 an und geht in eine Innenbohrung 49 über Der Ventilkörper 46 ist mittels eines Stutzens 55 mit Außengewinde 56 mit den Gasflaschen 7 bis 11 verschraubt. Fernerhin ist im Ventilkörper 46 ein Stutzen 53 zum Anschluß der Steuerleitungen vorgesehen. Zur Verbesserung der Gasströmung, ist die Kolbenstange 50 im Bereich des Stutzens 53 mit einem verringerten Durchmesser 54 versehen. Unterhalb der Ventilplatte 51 ist ein Anschlußstutzen 57 für ein Druckmeßgerät und/oder ein Bypass 58 vorgesehen. Eine Überströmöffnung 83 sorgt für einen Fluß des Steuergases auf den Kolben 48. Vom Abführstutzen 53 des Steuerventiles 7 geht eine Steuerleitung 12 ab, die in Steuerleitungen 12a bis 12d mündet. Von der Steuerleitung 12a geht eine Zweigleitung 13 zum Stutzen 26 der Kappe 27 des Flaschenventils 8. Ebenso gehen von den Steuerleitungen 12b bis 12d Zweigleitungen 14 bis 16 zu den Anschlußstutzen 26 der Flaschenventile 9 bis 11. Mit den Abfuhrstutzen 53 der Flaschenventile 8 bis 11 sind Abführleitungen 18 bis 21 verbunden, die in eine Sammelleitung 22 münden. Innerhalb der Steuerleitung 12 ist eine pneumatisch-mechanische Verzögerungseinrichtung 29 vorgesehen, vor der eine Leitung 30 mit einer Warneinrichtung 31 abgezweigt ist. Beim Öffnen des Steuerventils 7 wird die Warneinrichtung sofort in Tätigkeit gesetzt und die Verzögerungseinrichtung beginnt zu laufen. Nach Ablauf der eingestellten Verzögerungszeit strömt das Steuergas über die Leitungen 12 und 12a bis 12 d zu den Steuerventilen 8 bis 11 und öffnet diese, so daß das Löschmittel aus den Gasflaschen 3 bis 6 in die Sammelleitung 22 und von dort zu den nicht dargestellten Lösch-Leitungen strömen kann.

Im Brandfalle wird beispielsweise von einer nicht dargestellten Brandmeldezentrale ein elektrischer Impuls auf die elektrische Auslöseeinrichtung 17 des Steuerventils 7 geschaltet, die wiederum die Auslösevorrichtung 28 und damit das Steuerventil 7 öffnet. Damit strömt das Löschgas aus dem Steuerventil 7, zu den Flaschenventilen 8 - 11.

Der Vorteil des erfindungsgemäßen Kolbenventils ist darin zu sehen, daß ein Grundventil für mehrere Ventile genutzt werden kann, z.B. als Pilotflaschenventil, als Folgeflaschenventil oder dergleichen. So können anstelle der Kappe 27 Steuer- oder Anschlußköpfe verwendet werden.

Im Ausführungsbeispiel nach Fig. 2 ist in die Steuerleitung 12 ein Drosselorgan 32 mit Rückschlagsicherung eingebaut. Von der Steuerleitung 12 geht einmal die Steuerleitung 12 a zur Leitung 12 b bzw. zur Leitung 13 und zum anderen eine Leitung 33 zur Sammelleitung 22 ab. In diesem Ausführungsbeispiel ist die Gasflasche 2 als Pilotflasche mit einem Löschgas gefüllt, so daß dieses Gas mit zum Löschvorgang herangezogen werden kann. Das Drosselorgan 32 mit der Rückschlagsicherung ist so ausgerüstet, daß das Löschgas aus der Pilotflasche in zwei Ströme aufgeteilt wird, die einmal zum Steuern und zum anderen zum Löschen eingesetzt werden. Hier ist zusätzlich eine elektromechanische Verzögerungseinrichtung 29a vorgesehen.

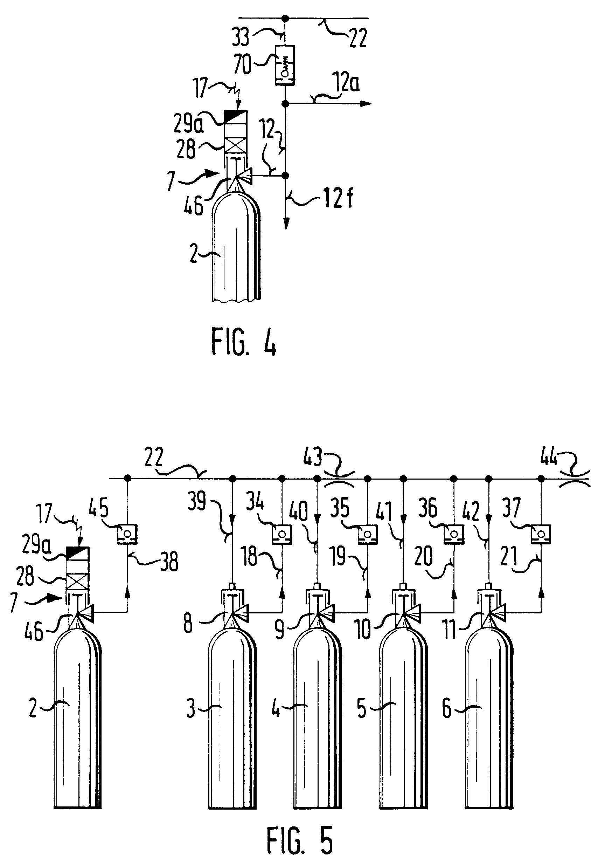

Im Ausführungsbeispiel in Fig. 3 ist das Drosselorgan 32a mit Rückschlagsicherung in der letzten Steuerleitung 12e vorgesehen und über eine Leitung 33a mit der Sammelleitung 22 verbunden. Mit 12f (Fig. 2 und 4) ist eine Zweigleitung angedeutet, die von der Steuerleitung 12 für weitere Ansteuerungen z.B. von Bereichsventilen eingesetzt wird.

Anstelle des Drosselorganes 32, 32a mit Rückschlagsicherung, kann ein Doppel-Rückschlagventil 70 in die Steuerleitung 12 eingebaut sein. Dieses Doppel-Rückschlagventil 70 sorgt dafür, daß das Gas aus der Pilotflasche 2 so lange zur Beaufschlagung der Steuerleitung 12 zur Verfügung steht, bis sich in der Sammelleitung 22 ein entsprechender Druckaufbau eingestellt hat. Erst danach gibt das Doppel-Rückschlagventil 70 das Gas aus der Pilotflasche 2 zum Löschen frei. Das Doppel-Rückschlagventil 70 besteht aus einem Ventilkörper 59 mit einem unteren Anschlußstutzen 60 für das Steuergas aus der Leitung 12 und mit einem oberen Abfuhrstutzen 61 für die Leitung 33 zur Sammelleitung 22. Dem Anschlußstutzen 60 ist ein Verschlußkörper 62 zugeordnet, der mittels einer Feder 63 die Ventilöffnung 69 verschließt. Der Verschlußkörper 62 sitzt in einer Verteilerkammer 68 von der mehrere Bypasskanäle 66 nach oben abgehen. Diese münden in radial verlaufende Überströmkanäle 67, die wiederum von einem Dichtkörper 64 mit Feder 65 verschlossen gehalten werden. Nach Öffnen des Steuerventiles 7 strömt das Steuergas über die Leitung 12 in den Stutzen 60 und hebt damit den Verschlußkörper 62 an. Das Gas strömt über die Verteilerkammer 68 in die Bypasskanäle 66 und in die Überströmkanäle 67. Der Dichtkörper 64 hält durch Federkraft und Gasdruck von unten über die Bohrung 71 den Abfuhrstutzen 61 geschlossen und verhindert ein weiteres Strömen des Steuergases. Folglich strömt das Steuergas in die Leitung 12a und die weiteren Leitungen 12 b bis 12 d und öffnet damit die Flaschenventile 8 bis 11. Nunmehr strömt das Gas aus den Flaschen 3 bis 6 in die Sammelleitung 22 und weiter über die Leitung 33 bzw. 33a in den Stutzen 61 des Doppel-Rückschlagventiles 70. Obwohl der Druck des jetzt ankommenden Gases verringert ist, drückt es den Dichtkörper 64 nach unten, weil sein oberer Durchmesser D größer ist, als sein unterer Durchmesser d un die Federkraft 65. Damit öffnen sich die Überströmkanäle 67, so daß das Gas aus der Pilotflasche 2 in die Sammelleitung 22 einströmen kann.

Fig. 5 zeigt eine Flaschenbatterie ohne Steuerleitungen. Hier ist das Steuerventil 7 mittels einer Leitung 38 direkt mit der Sammelleitung 22 verbunden. Von dieser gehen dann Zweigleitungen 39 bis 42 zu den Stutzen 26 der Flaschenventile 8 bis 11 ab. Damit sich ein nötiger Steuerdruck in der Sammelleitung 22 aufbaut, sind mehrere Drosseln 43 und 44 vorgesehen.

Zur Verhinderung von Rückstauungen sind in den Abführleitungen 18 bis 21 und in der Leitung 38 jeweils eine Rückschlagsicherung 34 bis 37 und 45 vorgesehen.

Fig. 8 zeigt ein weiteres Flaschenventil 8, bei dem der Kolben 48 und die Kolbenstange 50 mit einer Zentralbohrung 72 versehen sind. Diese ist im Bereich des Kolbens 48 mit einem Stopfen 73 und einer Dichtung 74, sowie mit einer dazwischen liegenden Durchstoßscheibe 75 versehen. Die Kolbenstange ist oberhalb des verringerten Querschnittes 54 von einer Feder 76 und einem O-Ring 77 umgeben.

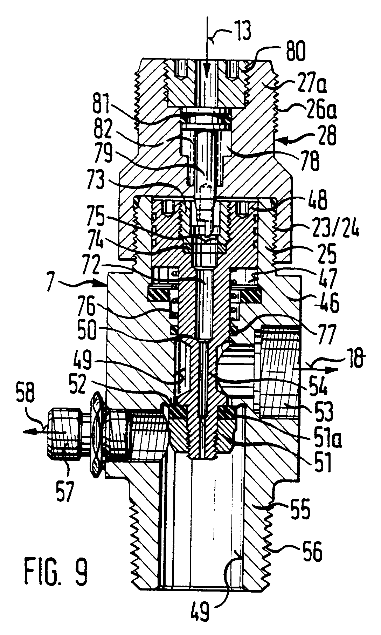

Fig. 9 zeigt ein Steuerventil 7 mit einer Auslösevorrichtung 28, das mit einem oberen Gehäuse 27a versehen und auf den Ventilkörper 46 aufgeschraubt ist. In einer Innenbohrung 78 sitzt eine Nadel 79, mit der eine Durchstoßscheibe 75 geöffnet werden kann. Die Nadel 79 ist im unteren Teil in dem Gehäuse 27a und im oberen Teil in einem Stopfen 80 geführt und fernerhin von einem O-Ring 81 und einer Feder 82 umgeben.

Die Erfindung ist nicht an die Ausführungsbeispiele gebunden. So können beispielsweise mehr oder weniger Hochdruckgasflaschen (2-6) als dargestellt zu einer Löschbatterie zusammengefaßt werden. Auch können (bei entsprechenden Löschgasen) die Verzögerungseinrichtungen 29 mit der Warneinrichtung 31 zu den Ausführungsbeispielen der Fig. 2 bis 5 gehören, oder als Verzögerungseinrichtungen 29a, 29b mit dem Steuerventil 7 verbunden sein.

## Patentansprüche

1. Vorrichtung zum Betreiben einer Feuerlöscheinrichtung mit einem gasförmigen Löschmittel, das in mehreren Gasflaschen (3-6) gelagert ist, wobei den Gasflaschen (3-6) eine mit einem Steuergas gefüllte Steuerflasche (2) vorgeschaltet ist, die ein Steuerventil (7) mit einer von einem pneumatischen oder elektrischen Ansteuerimpuls (17) beaufschlagbaren Auslöseeinrichtung (28) aufweist, wobei an das Steuerventil (7) eine Steuerleitung (12) angeschlossen ist, die über Zweigleitungen (13-16;39-42) mit den Flaschenventilen (8-11) der nachfolgenden Gasflaschen (3-6) verbunden ist, und wobei von den Flaschenventilen (8-11) jeweils eine Abführleitung (18-21) zu einer Sammelleitung (22) geführt ist und in die vom Steuerventil (7) ausgehende Steuerleitung (12) eine indirekte pneumatische Verzögerungseinrichtung (29) eingebaut ist,
**dadurch gekennzeichnet,**
daß die Flaschenventile (8-11) und das Steuerventil (7) als Kolbenventil (46) mit einer aufgeschraubten Kappe (27,27a) mit einem Anschlußstutzen (26,26a) ausgebildet sind,
daß die Auslöseeinrichtung (28) auf das Steuerventil (7) aufgesetzt ist, und
daß auf die Auslöseeinrichtung (28) eine unverzögerte elektromechanische Steuereinrichtung (29b) aufgesetzt ist.

2. Vorrichtung zum Betrieben einer Feuerlöscheinrichtung mit einem gasförmigen Löschmittel, das in mehreren Gasflaschen (3-6) gelagert ist, wobei den Gasflaschen (3-6) eine mit einem Steuergas gefüllte Steuerflasche (2) vorgeschaltet ist, die ein Steuerventil (7) mit einer von einem pneumatischen oder elektrischen Ansteuerimpuls (17) beaufschlagbaren Auslöseeinrichtung (28) aufweist, wobei an das Steuerventil (7) eine Steuerleitung (12) angeschlossen ist, die über Zweigleitungen (13-16;39-42) mit den Flaschenventilen (8-11) der nachfolgenden Gasflaschen (3-6) verbunden ist, und wobei von den Flaschenventilen (8-11) jeweils eine Abführleitung (18-21) zu einer Sammelleitung (22) geführt ist,
dadurch gekennzeichnet,
daß die Flaschenventile (8-11) und das Steuerventil (7) als Kolbenventil (46) mit einer aufgeschraubten Kappe (27,27a) mit einem Anschlußstutzen (26,26a) ausgebildet sind, die Auslöseeinrichtung (28) auf das Steuerventil (7) aufgesetzt ist, und auf die Auslöseeinrichtung (28) eine direkte elektromechanische Zeit-Verzögerungseinrichtung (29a) aufgesetzt ist.

3. Vorrichtung nach Anspruch 1 oder 2, dadurch gekennzeichnet, daß die Anschlußstutzen (26,26a) der Kappen (27,27a) für die Flaschenventile (8-11) mit den Zweigleitungen (13-16;39-42) verbunden sind.

4. Vorrichtung nach einem der Ansprüche 1-3, dadurch gekennzeichnet, daß die Steuerflasche (2) als Pilotflasche mit Löschgas gefüllt ist, daß von der Steuerleitung (12) Leitungen (12a-12e) zu den Flaschenventilen (8-11) abgezweigt sind, und daß zwischen der ersten Abzweigung und der Sammelleitung (22) innerhalb der Steuerleitung (12) oder hinter dem letzten Flaschenventil (11) ein Drosselorgan (32,32a) mit Rückschlagsicherung eingebaut ist, von dem eine Leitung (33;33a) zur Sammelleitung (22) führt.

5. Vorrichtung nach Anspruch 4, dadurch gekennzeichnet, daß das Drosselorgan als Doppel-Rückschlagventil (70) ausgebildet ist.

6. Vorrichtung nach einem der Ansprüche 1-5, dadurch gekennzeichnet, daß die Anschlüsse für die Zweigleitungen (13-16) als T-Stücke ausgebildet sind, wobei die Steuerleitung (12) zwischen den einzelnen Anschlüssen aus Schläuchen bestehen, die auf die Enden der T-Stücke aufgesteckt sind.

7. Vorrichtung nach Anspruch 1 oder 2, dadurch gekennzeichnet, daß die Steuerflasche (2) als Pilotflasche mit Löschgas gefüllt ist, daß von dem Steuerventil (7) eine Abführleitung (38) mit einer Rückschlagsicherung (45) zu der Sammelleitung (22) und von dieser jeweils eine Zweigleitung (39-42) zu den Flaschenventilen (8-11) geführt sind, und daß die Sammelleitung (22) mit mindestens zwei Drosseln (43,44) versehen ist.

8. Vorrichtung nach einem der Ansprüche 1-7, dadurch gekennzeichnet, daß die Abführleitungen (18-21) mit Rückschlagsicherungen (34-37) versehen sind,

9. Vorrichtung nach einem der Ansprüche 1-8, bei welcher das Kolbenventil (46) einen Ventilkörper mit Innenbohrung (49) und einen Gewindestutzen (55) zum Aufschrauben auf die Steuer- und Gasflaschen (2-6) sowie einen Anschlußstutzen (26) für das Steuergas und einen Abfuhrstutzen (53) für das Steuer- bzw. Löschgas sowie einen in der Bohrung (47) des Ventilkörpers bewegbaren Steuerkolben (48) aufweist, dadurch gekennzeichnet, daß das Kolbenventil (46) eine Kolbenstange (50) aufweist, die am unteren Ende eine Ventilplatte (51a) trägt, die vom Steuer- bzw. Löschgas gegen einen Ventilsitz (52) des Ventilkörpers (46) preßbar ist, und daß die Kolbenstange (50) im Bereich des Abfuhrstutzens (53) einen verringerten Querschnitt (54) aufweist.

10. Vorrichtung nach Anspruch 9, dadurch gekennzeichnet, daß in den Ventilkörper unterhalb der Ventilplatte (51a) seitlich ein Anschlußstutzen (57) für ein Druckmeßgerät und/oder eine Bypassleitung (58) und etwa auf gleicher Ebene versetzt dazu ein Anschlußstutzen (57a) für eine Berstscheibe (57b) o.dgl. vorgesehen sind.

11. Vorrichtung nach Anspruch 5, dadurch gekennzeichnet, daß das Doppel-Rückschlagventil (70) einen Ventilkörper (59) mit Anschluß- (60) und Abfuhrstutzen (61), einen unteren Verschlußkörper (62) mit Feder (63) und einen oberen Dichtkörper (64) mit Feder (65) aufweist, und daß Bypasskanäle (66) mit unterer Verteilerkammer (68) und oberen Überströmkanälen (67) vorgesehen sind, die bei geschlossener Gasflasche mittels der Federn (63,65) vom Verschlußkörper (62) bzw. Dichtkörper (64) nach außen abgedichtet sind.

12. Vorrichtung nach Anspruch 11, dadurch gekennzeichnet, daß der Dichtkörper (64) mit einem oberen Durchmesser D und einem unteren Durchmesser d ausgebildet ist, wobei D > d ist.

## Claims

1. A device for operating a fire extinguishing equipment comprising a gaseous extinguishing medium stored in a plurality of gas bottles (3-6), the gas bottles (3-6) being connected upstream thereof to a control bottle (2) filled with a control gas and provided with a control valve (7) having a trigger means (28) to be actuated by a pneumatic or electric drive pulse (17), wherein the control valve (7) is connected to a control line (12) connected via branch lines (13-16;39-42) to the bottle valves (8-11) of the following gas bottles (3-6), and wherein a respective discharge line (18-21) leads from each of the bottle valves (8-11) to a collecting line (22), and the control line (12) issuing from the control valve (7) has an indirect pneumatic delay means (29) built therein,
**characterized in**
that the bottle valves (8-11) and the control valve (7) are arranged as a piston valve (46) bearing a screw-fitted cap (27,27a) with a connecting piece (26,26a),
that the trigger means (28) is mounted to the control valve (7), and
that the trigger means (28) has an undelayed electromechanical control means (29b) mounted thereon.

2. A device for operating a fire extinguishing equipment comprising a gaseous extinguishing medium stored in a plurality of gas bottles (3-6), the gas bottles (3-6) being connected upstream thereof to a control bottle (2) filled with a control gas and provided with a control valve (7) having a trigger means (28) to be actuated by a pneumatic or electric drive pulse (17), wherein the control valve (7) connects to a control line (12) connected via branch lines (13-16;39-42) to the bottle valves (8-11) of the following gas bottles (3-6), and wherein a respective discharge line (18-21) is guided from each of the bottle valves (8-11) to a collecting line (22),
characterized in that the bottle valves (8-11) and the control valve (7) are arranged as a piston valve (46) bearing a screw-fitted cap (27,27a) with a connecting piece (26,26a), the trigger means (28) is mounted to the control valve (7), and the trigger means (28) has a direct electromechanical time delay means (29b) mounted thereon.

3. The device according to claim 1 or 2, characterized in that the connecting pieces (26,26a) of the caps (27,27a) for the bottle valves (8-11) are connected to the branch lines (13-16;39-42).

4. The device according to any one of claims 1-3, characterized in that the control bottle (2) as a pilot bottle is filled with quench gas, that the control line (12) has lines (12a-12e) branching off therefrom to the bottle valves (8-11), and that a throttle member (32,32a) with kick-back protection is inserted between the first branch and the collecting line (22) within the control line (12) or downstream of the last bottle valve (11), with a line (33,33a) leading from the throttle member to the collecting line (22).

5. The device according to claim 4, characterized in that the throttle member is arranged as a two-way back-check valve (70).

6. The device according to any one of claims 1-5, characterized in that the connectors for the branch lines (13-16) are formed as T-pieces, the control lines (12) between the individual connectors comprising hoses fitted to the ends of the T-pieces.

7. The device according to claim 1 or 2, characterized in that control bottle (2) as a pilot bottle is filled with quench gas, that a discharge line (38) with a kick-back protection device (45) is guided from the control valve (7) to the collecting line (22) and a respective branch line (39-42) is guided from the collecting line to the bottle valves (8-11), and that the collecting line (22) is provided with at least two throttles (43,44).

8. The device according to any one of claims 1-7, characterized in that the discharge lines (18-21) are provided with kick-back protection devices (34-37).

9. The device according to any one of claims 1-8, wherein the piston valve (46) comprises a valve body with an inner bore (49), a threaded connecting piece (55) for screw-fitting to the control and gas bottles (2-6), a connecting piece (26) for the control gas, a discharge connecting piece (53) for the control gas and the quench gas, respectively, and a control piston (48) arranged to be moved in the bore (47) of the valve body, characterized in that the piston valve (46) comprises a piston rod (50) which on its lower end carries a valve plate (51a) arranged to be pressed by the control and quench gas, respectively, against a valve seat (52) of the valve body (46), and that the piston rod (50) has a reduced cross-section (54) in the region of the discharge connecting piece (53).

10. The device according to claim 9, characterized in that, laterally in the valve body below the valve plate (51a), a connecting piece (57) for a pressure measuring device and/or a bypass line (58), and, substantially in the same plane at a displacement thereto, a connecting piece (57a) for a rupture disk (57b) or the like are provided.

11. The device according to claim 5, characterized in that the two-way back-check valve (70) comprises a valve body (59) with a connecting piece (60) and discharge piece (61), a lower closure body (62) with a spring (63) and an upper sealing body (64) with a spring (65), and that bypass channels (66) with a lower distribution chamber (68) and with upper overflow channels (67) are provided, which in the closed condition of the gas bottle are sealed towards the outside by the closure body (62) and the sealing body (64) through the action of the springs (63,65).

12. The device according to claim 11, characterized in that the sealing body (64) is formed to have an upper diameter D and a lower diameter d, where D > d.

## Revendications

1. Dispositif pour la mise en action d'un système d'extinction d'incendie utilisant un agent gazeux d'extinction qui est stocké dans plusieurs bouteilles de gaz (3-6), dans lequel une bouteille de commande (2) remplie d'un gaz de commande est branchée en amont des bouteilles de gaz (3-6) et présente une vanne de commande (7) dotée d'un système de déclenchement (28) sur lequel une impulsion pneumatique ou électrique de commande (17) peut être appliquée, une conduite de commande (12) étant raccordée à la vanne de commande (7) et étant reliée par des conduites de dérivation (13-16; 39-42) aux vannes (8-11) des bouteilles de gaz (3-6) suivantes, une conduite de sortie (18-21) partant de chaque vanne de bouteille (8-11) pour déboucher dans une conduite de collecte (22), et un système pneumatique indirect de temporisation (29) étant monté dans la conduite de commande (12) partant de la vanne de commande (7),
caractérisé en ce que
les vannes de bouteille (8-11) et la vanne de commande (7) sont configurées comme vannes à piston (46) sur lesquelles est vissé un bonnet (27, 27a) doté d'un raccord (26, 26a),
en ce que le système de déclenchement (28) est placé sur la vanne de commande (7), et
en ce qu'un système électromécanique de commande (29b) non temporisé est place sur le système de déclenchement (28).

2. Dispositif pour la mise en action d'un système d'extinction d'incendie utilisant un agent gazeux d'extinction qui est stocké dans plusieurs bouteilles de gaz (3-6), dans lequel une bouteille de commande (2) remplie d'un gaz de commande est branchée en amont des bouteilles de gaz (3-6) et présente une vanne de commande (7) dotée d'un système de déclenchement (28)sur lequel une impulsion pneumatique ou électrique de commande (17)peut être appliquée, une conduite de commande (12) étant raccordée à la vanne de commande (7) et étant reliée par des conduites de dérivation (13-16; 39-42) aux vannes (8-11) des bouteilles de gaz (3-6) suivantes, une conduite de sortie (18-21) partant de chaque vanne de bouteille (8-11) pour débouche, dans une conduite de collecte (22),
caractérisé en ce que
les vannes de bouteille (8-11) et la vanne de commande (7) sont configurées comme vannes à piston (46) sur lesquelles est vissé un bonnet (27, 27a) doté d'un raccord (26, 26a), le système de déclenchement (28) est placé sur la vanne de commande (7), et un système électromagnétique de temporisation directe (29a) est placé sur le système de déclenchement (28).

3. Dispositif selon la revendication 1 ou 2, caractérisé en ce que les raccords (26, 26a) des bonnets (27, 27a) prévus pour les vannes de bouteille (8-11) sont reliés aux conduites de dérivation (13-16; 39-42).

4. Dispositif selon l'une des revendications 1 à 3, caractérisé en ce que la vanne de commande (2) servant de vanne pilote est remplie de gaz d'extinction, en ce que des conduites (12a-12e) partent de la conduite de commande (12) en direction des vannes de bouteille (8-11), et en ce qu'entre la première dérivation et la conduite de collecte (22), un organe d'étranglement (32, 32a) doté d'une protection anti-retour est monté dans la conduite de commande (12) ou en aval de la dernière vanne de bouteille (11), et une conduite (33; 33a) part de cet organe d'étranglement vers la conduite de collecte (22).

5. Dispositif selon la revendication 4, caractérisé en ce que l'organe d'étranglement est configuré comme double clapet anti-retour (70).

6. Dispositif selon l'une des revendications 1 à 5, caractérisé en ce que le raccordement des conduites de dérivation (13-16) sont configurées comme pièces en T, les conduites de commande (12) disposées entre les raccords individuels étant constituées de tuyaux flexibles qui sont placés sous les extrémités de pièces en T.

7. Dispositif selon la revendication 1 ou 2, caractérisé en ce que la bouteille de commande (2) servant de bouteille pilote est remplie de gaz d'extinction, en ce qu'une conduite de sortie (38) dotée d'une protection anti-retour (45) part de la vanne de commande (7) pour déboucher dans la conduite de collecte (22), et que des conduites de dérivation (39-42) raccordent cette dernière aux vannes de bouteille (8-11), et en ce que la conduite de collecte (22) est dotée d'au moins deux étrangleurs (43, 44).

8. Disposition selon l'une des revendications 1 à 7, caractérisé en ce que les conduites de sortie (18-21) sont dotées de protection anti-retour (34-37).

9. Disposition selon l'une des revendications 1 à 8, dans lequel la vanne à piston (46) présente un corps de vanne doté d'un alésage intérieur (49) et d'un raccord fileté (55) permettant de la visser sur la bouteille de commande ou les bouteilles de gaz (2-6), ainsi qu'un raccord (26) au gaz de commande et un raccord de sortie (53) au gaz de commande ou d'extinction, ainsi qu'un piston de commande (48) pouvant se déplacer dans l'alésage (47) du corps de vanne, caractérisé en ce que la vanne à piston (46) présente une tige de piston (50) qui, à son extrémité inférieure, porte une plaque de vanne (51a) qui peut être repoussée par le gaz de commande ou d'extinction contre un siège de vanne (52) du corps de vanne (46), et en ce que dans la zone du raccord de sortie (53), la tige de piston (50) présente une section transversale (54) réduite.

10. Dispositif selon la revendication 9, caractérisé en ce que dans le corps de vanne, en dessous de la plaque de vanne (51a), un raccord (57) pour un appareil de mesure de pression et/ou une conduite de dérivation (58) est prévu latéralement, et sensiblement sur le même plan, un raccord (57a) pour un disque d'éclatement (57b) ou similaire y est prévu en position décalée.

11. Dispositif selon la revendication 5, caractérisé en ce que le double clapet anti-retour (70) présente un corps de clapet (59) doté d'un raccord (60) et d'un raccord de sortie (61), un corps inférieur de fermeture (62) doté d'un ressort (63) et un corps supérieur d'étanchéité (64) doté d'un ressort (65), et en ce que les canaux de dérivation (66) dotés d'une chambre inférieure de répartition (68) et de canaux supérieurs de débordement (67) sont prévus et, lorsque la bouteille de gaz est fermée, ils sont rendus étanches vis-à-vis de l'extérieur au moyen des ressorts (63, 65) du corps de fermeture (62) ou du corps d'étanchéité (64).

12. Dispositif selon la revendication 11, caractérisé en ce que le corps d'étanchéité (64) présente un diamètre supérieur D et un diamètre inférieur d, et D > d.
